# EUROPÄISCHE PATENTSCHRIFT

(11) **EP 0 591 667 B1**
(45) Veröffentlichungstag und Bekanntmachung des Hinweises auf die Patenterteilung: **05.11.1997**
(21) Anmeldenummer: 93113528.9
(22) Anmeldetag: 24.08.1993
(51) Int. Cl.: F16M 13/02

(54) **Halterung für ein Gehäuse, insbesondere mit einer Durchführung für ein Kabel**
Housing holding device, particularly device with a passage for a cable
Dispositif de fixation d'un carter, en particulier dispositif pourvu d'un passage pour un cable

(30) Priorität: 09.10.1992 DE 4234148
(43) Veröffentlichungstag der Anmeldung: 13.04.1994
(73) Patentinhaber: Bosch-Siemens Hausgeräte GmbH, 81669 München (DE)
(72) Erfinder: Braun, Helmut, D-89542 Herbrechtingen (DE); Kordon, Rolf, D-89537 Giengen (DE)

(56) Entgegenhaltungen:
- EP-A- 0 085 588
- US-A- 4 731 030

## Beschreibung

Die Erfindung betrifft eine Halterung für ein Gehäuse, insbesondere mit einer Durchführung für Kabel versehene Halterung, die verdeckt hinter einer Wand oder dgl. angeordnet ist und über deren Durchführung das Kabel dem Gehäuse zugeführt wird, das an seinen Wandungen mit Befestigungselementen versehen ist, die in auf der Halterung angeordnete Aufnahmen eingreifen und das Gehäuse dadurch halten.

Es ist bekannt, Wände, deren Materialbeschaffenheit und deren Wandstärke nicht dazu geeignet sind, um daran mittels Schraubverbindung ein Gehäuse ausreichend zu befestigen, mit als Hinterlegteilen ausgebildeten Halterungen zu versehen, um die notwendigen Voraussetzungen für eine Befestigung zu schaffen. Für den Fall, daß das Gehäuse mit einer elektrischen Anschlußleitung ausgestattet ist, um beispielsweise einen darin angeordneten elektrischen Antrieb mit Strom zu versorgen, weisen derartige Hinterlegteile neben Schraubverbindungen zulassende Aufnahmen, zusätzlich noch eine Kabeldurchführung auf, mit deren Hilfe eine elektrische Anschlußleitung durch die Wand hindurchgeführt wird. Für den Fall, daß das Hinterlegteil nach seiner Anbringung an der Wand aus irgendwelchen Gründen, sei es z.B. durch Montage oder Fertigungsfolgen, nicht mehr einsehbar ist, müssen die Positionen von dessen Aufnahmen entweder mittels Schablonen oder durch vorherige Kennzeichnung diese Positionen anhand von in die Wand eingebrachten Bohrungen, die der letztendlichen Position dieser Aufnahmen entsprechen, gekennzeichnet werden.

Beide Möglichkeiten ziehen zusätzliche, zeitaufwendige Arbeitsgänge nach sich, so daß unter Umständen hohe Kosten verursacht werden, insbesondere dann, wenn es sich bei diesen Wänden um Gehäusewände von Serienprodukten handelt. Außerdem hat die Maßnahme, die Wände vor Anbringung der Halterung an der Position ihrer Aufnahmen mit Bohrungen zu versehen, um die Aufnahmen zu kennzeichnen, noch den Nachteil, daß für eine wahlweise Bestückung dieser Wand mit einem Gehäuse, zusätzlich Verschlußstopfen für die Bohrungen bereitgestellt werden müssen, sollte das Gehäuse aus Ausstattungsgründen entfallen.

Der Erfindung liegt die Aufgabe zugrunde, mit einfachen Mitteln eine positionsgenaue Zuordnung für ein Gehäuse zu seiner verdeckt hinter einer Wand oder dgl. angeordneten Halterung zu schaffen, die ein zeitaufwendiges Ermitteln bzw. Kenntlichmachen ihrer eine Befestigung zulassenden Aufnahmen erübrigt.

Die Aufgabe wird gemäß der Erfindung dadurch gelöst, daß am Gehäuse und auf der Halterung Zentriermittel vorgesehen sind, die bei der Montage der beiden zusammenwirken und dadurch eine eindeutige Lagezuordnung der Befestigungselemente zu den auf der Halterung angeordneten Aufnahmen sicherstellen.

Die erfindungsgemäße Lösung hat den Vorteil, daß ohne Anwendung irgendwelcher Hilfsmaßnahmen die Befestigungselemente den Aufnahmen positionsgenau zugeordnet sind, wodurch eine erhebliche Montageerleichterung und somit eine deutliche Steigerung des Montagedurchsatzes gewährleistet ist, da sich ein zeitaufwendiges Kenntlichmachen der Aufnahmen bzw. ein nachträgliches Ermitteln dieser erübrigt.

Nach einer weiteren bevorzugten Ausführungsform des Gegenstandes der Erfindung ist vorgesehen, daß die Zentriermittel am Gehäuse zapfenartig und auf der Halterung als Höhlungen ausgebildet sind, in die die Zapfen bei der Montage der beiden eintauchen, wobei ein Zapfen in die Käbeldurchführung eintaucht und als Kabelführung für das darin angeordnete Kabel dient.

Eine derartige Konstruktion hat den Vorteil, daß die Zapfen zugleich als Montagehilfe dienen, da sie das Gehäuse, bis zu seiner endgültigen Befestigung an der Halterung, ohne zusätzliche Haltemaßnahmen tragen, so daß eine problemlose Montage nur durch eine einzige Person möglich ist. Außerdem ist durch den als Kabelführung dienenden Zapfen die elektrische Anschlußleitung innerhalb der Aufnahme sicher geführt.

Auf besonders einfache Weise in verhältnismäßig engen Toleranzgrenzen ist die elektrische Anschlußleitung geführt und zudem in einem gewissen Umfang vor Beschädigung bei der Montage geschützt, wenn nach einer weiteren vorteilhaften Ausgestaltung des Gegenstandes der Erfindung vorgesehen ist, daß der als Kabelführung dienende Zapfen aus zwei im Abstand voneinander angeordneten Elementen gebildet ist, die zwischen sich das Kabel aufnehmen und führen.

Ein hohe Positioniergenauigkeit der Befestigungselemente zu den Aufnahmen an der Halterung trotz einer einfachen Geometrie und somit einer preisgünstigen Herstellung der Zentriermittel ist gewährleistet, wenn nach einer nächsten bevorzugten Ausführungsform des Gegenstandes der Erfindung vorgesehen ist, daß wenigstens zwei Zentriermittel mit kreisförmigem Grundriß vorgesehen sind, die im Abstand voneinander angeordnet sind.

Besonders platzsparend und zweckmäßig ist die Ausgestaltung der Zentriermittel, wenn nach einer nächsten bevorzugten Ausgestaltung des Gegenstandes der Erfindung vorgesehen ist, daß wenigstens ein Zentriermittel mit einem eine Verdrehung zwischen Halterung und Gehäuse verhindernden Grundriß vorgesehen ist.

Die Erfindung ist in der nachfolgenden Beschreibung anhand eines in der beigefügten Zeichnung vereinfacht dargestellten Ventilatorgehäuses erläutert. Es zeigen:
- Fig. 1: ein aus zwei unterschiedlich tiefen Gehäuseteilen gebildetes Ventilatorgehäuse, dessen tieferes Teil an seiner Rückseite mit einem Zapfen versehen ist, der einerseits als Kabelführung ausgebildet ist und andererseits als Zentriermittel dient, das mit einem axial von diesem beabstandet dargestellten weiteren Zentriermittel an einer Halterung zusammenwirkt, in perspektivischer Ansicht von vorne,
- Fig. 2: in etwa in natürlichem Maßstab die Kältegerätewand mit in deren als Wärmeisolation dienenden Isolierschaum eingebetteten Halterung, mit dem daran befestigten, einen Ventilator aufnehmenden Gehäuse, in Schnittdarstellung gemäß der Schnittlinie II-II, und
- Fig. 3: in einem horizontalen Schnitt die Kältegerätewand im Bereich der darin angeordneten Halterung und das an dieser befestigte Gehäuse, in etwa in natürlichem Maßstab.

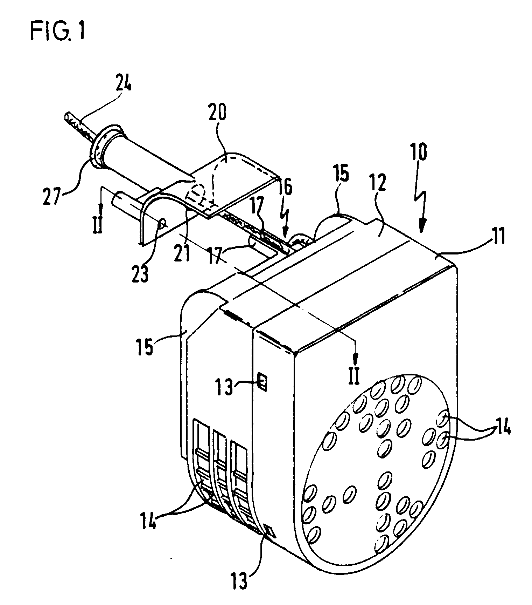

Gemäß Fig. 1 ist ein Gehäuse 10 gezeigt, das in Vorderansicht eine im wesentlichen rechteckförmige Außenkontur aufweist, wobei die tieferliegende kurze Seite des Rechtecks durch einen tangential an dessen in Einbaulage vertikal angeordneten Längsseiten anschließenden Kreisbogen ersetzt ist. Das Gehäuse 10 weist zwei unterschiedlich tiefe Gehäuseteile auf, von denen das flachere mit 11 und das tiefere mit 12 bezeichnet ist. Die Gehäuseteile 11 und 12 sind durch an beiden angeordneten Rastmitteln 13 in Form von zusammenwirkenden Rastnasen und Durchbrüchen miteinander lösbar zu einer Einheit verbunden. Beide Gehäuseteile 11 und 12 sind mit Luftdurchlaßöffnungen 14 versehen, wobei die an der Frontseite des Gehäuses 10, die zugleich auch die des flacheren Teils 11 darstellt, kreisförmig ausgebildet sind, während die im Bereich des Kreisbogens und der seitlichen Wandungen des tieferen Gehäuseteils 12 angeordneten, rechteckförmigen Querschnitt aufweisen. Das tiefere Gehäuseteil 12 ist auf seiner vom flacheren Gehäuseteil 11 abgewandten, als Rückwand des Gehäuses 10 dienenden Seite, an ihrer Außenseite, nahe deren seitlichen Rändern mit im Querschnitt rechteckförmigen Leisten 15 versehen, die mit ihrer schmäleren Querschnittsseite senkrecht an der Außenseite angeordnet sind. Die Leisten 15 laufen einerseits in einer kreisbogenartigen Kontur zur höherliegenden, kürzeren Seite des tieferen Gehäuseteils 12 aus und enden andererseits im Bereich des Übergangs der Längsseiten in den Kreisbogen in etwa senkrecht zur Außenseite der Rückwand des tieferen Gehäuseteils 12. Zwischen den beiden Leisten 15, etwas außermittig, nahe der kürzeren Seite des Gehäuses 10 ist ein Zapfen 16 angeordnet, der einen im wesentlichen kreisförmigen Querschnitt aufweist und aus zwei mit kreissegmentartigem Querschnitt versehenen Elementen 17 gebildet ist, deren einander zugewandte gerade Flächenabschnitte im parallelen Abstand zueinander angeordnet sind.

Bei der Montage des Gehäuses 10 an einem, zu einem nicht gezeigten Kühlgerät gehörendem Wandabschnitt 18, der zu diesem Zweck mit einer verdeckt hinter einem dessen Wärmeisolation verkleidenden Wandprofil 19 angeordneten Halterung 20 ausgestattet ist, kommen die Leisten 15 auf der ihr zugewandten Seite des Wandprofils 19 zur Anlage, wobei im befestigten Zustand des Gehäuses 10 die Leisten 15 als Auflager für das Gehäuse 10 dienen.

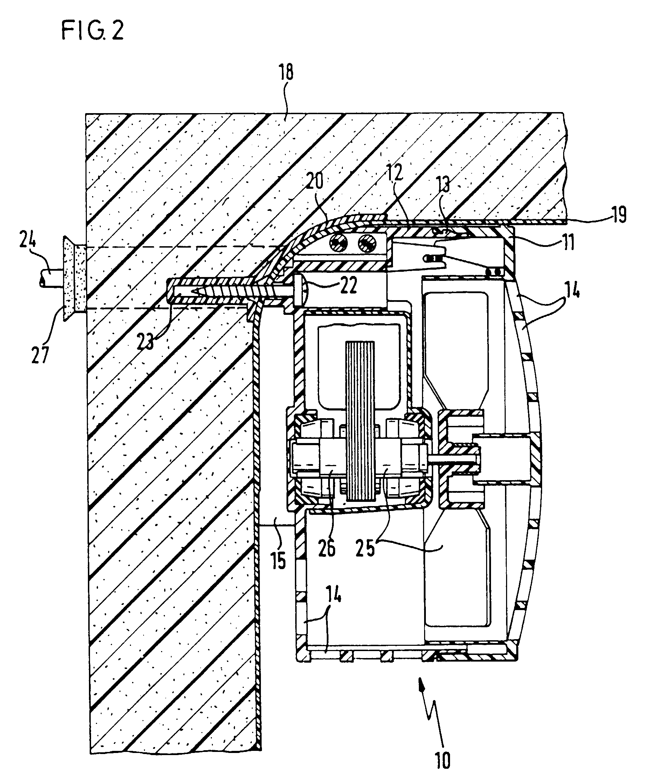

Wie insbesondere aus Fig. 2 hervorgeht, ist die Halterung 20 am Wandabschnitt 18 umittelbar in dessen mit einem Radius versehenen Übergang von einem horizontalen in einem vertikalen Wandteil angeordnet, wobei die Halterung 20 auf der der Wärmeisolation zugewandten Seite des Wandprofils 19 anliegend, an diesem angeordnet und mit diesem verbunden ist.

Während des Montagevorganges des Gehäuses 10 taucht der Zapfen 16 mit geringem, radialen Spiel in eine auf der Halterung 20 angeordnete, an eine Aussparung im Wandprofil 19 anschließende Höhlung 21 ein, wodurch das Gehäuse 10 einerseits in einer vormontierten, seine endgültige Befestigung erleichternden Stellung gehalten ist. Andererseits dient das Eintauchen des Zapfens 16 in die Höhlung 21 zusammen mit der Anlage der Leisten 15 mit ihrem konturengleich an den Radius des Wandprofils 19 im Übergangsbereich angepaßten Radius als Zentriermittel für in einem Durchbruch die Rückwand des tieferen Gehäuseteils 12 durchdringendes Befestigungsmittel 22, (z.B. in Form einer Schraube) und einer neben der Höhlung 21 mit Abstand dazu, in etwa auf deren Höhe, nahezu mittig zwischen den Leisten 15 liegenden, sacklochartig ausgebildete mit an das Gehäuse 10 angeformte Aufnahme 23, die das Befestigungsmittel 22 aufzunehmen vermag. Auf diese Weise wird eine eindeutige Lagezuordnung des Befestigungselements 22 zu der Aufnahme 23 sichergestellt. Die im Wandprofil 19 angeordnete, sich an die Höhlung 21 zum Gehäuse 10 hin anschließende Aussparung dient dazu, die Höhlung 21 auf der verdeckt angeordneten Halterung 20 zum Einbringen des Zapfens 16 sichtbar zu machen. Die Aussparung wird erst unmittelbar vor dem Anbau des Gehäuses 10 an den Wandabschnitt 18 mittels eines entsprechenden Werkzeugs freigelegt, das über die Höhlung 21 von dessen Außenseite her an die Position der in den Wandabschnitt einzubringenden Aussparung herangeführt wird. Auf diese Weise können Wandabschnitte von Serienprodukten, wie dies Kühlgeräte darstellen, mit Halterungen bestückt werden, ohne daß die Kühlgutwand für den Fall, daß die Halterung ungenutzt bleibt, mit Markierungen in Form von Durchbrüchen ausgestattet sein muß, die die Aufnahmen an der Halterung kennzeichnen.

Für den allgemeineren Fall, daß das Gehäuse nicht im Übergangsbereich zweier Wandteile befestigt werden soll, so daß infolge der Anlage des Gehäuses 10 am Wandabschnitt 18 bereits ein Freiheitsgrad des Gehäuses 10 festgelegt ist, sind an der Rückseite des tieferen Gehäuseteils 12 zwei im Abstand (z.B in diagonalem Abstand) voneinander angeordnete Zapfen vorgesehen, die in entsprechende Höhlungen auf der Halterung 20 einzutauchen vermögen, wobei eine Höhlung zugleich als Kabeldurchführung für das den Wandabschnitt 18 durchquerende Kabel dient.

Ebenso kann zur genauen Zentrierung der Befestigungsmittel zu den Aufnahmen auch ein einziger Zapfen zur Anwendung kommen. In diesem Fall ist dieser beispielsweise mit einem quadratischen, rechteckigen, dreieckigen oder sechseckigen Grundriß versehen und vermag in vom Querschnitt her angepaßte Höhlungen einzutauchen, wobei die Höhlung zugleich wieder als Kabeldurchführung dient. Durch derartig ausgelegte Zentriermittel ist das Gehäuse 10 sowohl an der gewünschten Position innerhalb des Wandabschnitts 18 als auch in der vorgesehenen Stellung festgelegt.

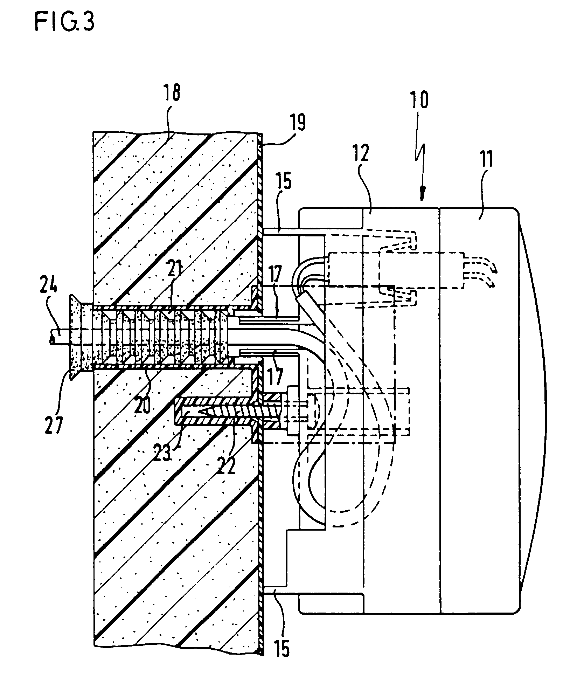

Wie sowohl aus Fig. 1 als auch aus Fig. 3 zu erkennen ist, dient die Höhlung 21 zugleich als Durchführung für ein Kabel 24, das einen zu einem Ventilator 25 gehörenden elektrischen Antriebsmotor 26 mit Strom versorgt. Der Ventilator 25 dient dabei zur Förderung des von ihm erzeugten Luftstromes über die Luftdurchlaßöffnungen 14. Das Kabel 24 ist einerseits auf der Rückseite des tieferen Gehäuseteils 12, zwischen den beiden, den Zapfen 16 darstellenden kreissegmentartigen Elementen 17 und andererseits innerhalb der Höhlung 21 durch eine elastische Durchführungsdichtung 27 geführt und in einem gewissen Umfang gehalten.

## Patentansprüche

1. Halterung (20) und daran befestigtes Gehäuses (10), wobei die Halterung verdeckt hinter einer Wand (19) od.dgl. angeordnet ist und Aufnahmen (23) aufweist, in welche an den Wandungen des Gehäuses (10) angeordnete Befestigungselemente (22) einzugreifen vermögen und das Gehäuse (10) dadurch haltern, **dadurch gekennzeichnet**, daß am Gehäuse (10) und an der Halterung (20) Zentriermittel vorgesehen sind, die bei der Montage der beiden zusammenwirken und dadurch eine eindeutige Lagezuordnung der Befestigungselemente (22) zu den auf der Halterung (20) angeordneten Aufnahmen (23) sicherstellen.

2. Halterung nach Anspruch 1 mit einer zur Zuführung für ein Kabel zum Gehäuse dienenden Durchführung, dadurch gekennzeichnet, daß die Zentriermittel am Gehäuse (10) zapfenartig und auf der Halterung (20) als Höhlungen (21) ausgebildet sind, in die die Zapfen (16) bei der Montage der beiden eintauchen, wobei ein Zapfen (16) in die Kabeldurchführung eintaucht und als Kabelführung für das darin angeordnete Kabel (24) dient.

3. Halterung nach Anspruch 2, dadurch gekennzeichnet, daß der als Kabelführung dienende Zapfen (16) aus zwei im Abstand voneinander angeordneten Elementen (17) gebildet ist, die zwischen sich das Kabel (24) aufnehmen und führen.

4. Halterung nach einem der Ansprüche 1 bis 3, dadurch gekennzeichnet, daß wenigstens zwei Zentriermittel mit kreisförmigem Grundriß vorgesehen sind, die im Abstand voneinander angeordnet sind.

5. Halterung nach einem der Ansprüche 1 bis 3, dadurch gekennzeichnet, daß wenigstens ein Zentriermittel mit einem eine Verdrehung zwischen Halterung (20) und Gehäuse (10) verhindernden Grundriß vorgesehen ist.

## Claims

1. Mounting (20) and housing (10) fastened thereat, wherein the mounting is arranged to be concealed behind a wall (19) or the like and displays receptacles (23), into which fastening elements (22) arranged at the walls of the housing (10) are capable of engaging and thereby retain the housing (10), characterised thereby that centring means are provided at the housing (10) and at the mounting (20) and co-operate during the assembly of both and thereby securean unambiguous positional association of the fastening elements (22) with the receptacles (23) arranged on the mounting (20).

2. Mounting according to claim 1 with a feedthrough serving for the feed-in of a cable into the housing, characterised thereby, that the centring means are formed in the manner of spigots at the housing (10) and as cavities (21) on the mounting (20), into which cavities the spigots (16) enter during the assembly of both, wherein one spigot (16) enters into the cable feedthrough and serves as cable guide for the cable (24) arranged therein.

3. Mounting according to claim 2, characterised thereby, that the spigot (16) serving as cable guide is formed of two elements (17), which are arranged at a spacing one from the other and between them receive and guide the cable (24).

4. Mounting according to one of the claims 1 to 3, characterised thereby, that at least two centring means of circular outline are provided, which are arranged at a spacing one from the other.

5. Mounting according to one of the claims 1 to 3, characterised thereby, that at least one centring means is provided with an outline preventing a rotation between the mounting (20) and the housing (10).

## Revendications

1. Support (20) ainsi que boîtier (10) fixé à celui-ci, le support étant disposé derrière une paroi (19) ou similaire et masqué par celle-ci et comportant des logements (23), dans lesquels s'engagent des éléments de fixation (22) qui sont disposés sur les parois du boîtier (10) et assurent ainsi la fixation dudit boîtier (10), caractérisé par le fait qu'il est prévu sur le boîtier (10) et sur le support (20) des moyens de centrage qui, lors du montage des deux éléments, coopèrent entre eux et assurent ainsi un positionnement parfait des éléments de fixation (22) par rapport aux logements (23) aménagés sur le support (20).

2. Support selon la revendication 1 avec un passage pour l'entrée d'un câble dans le boîtier, caractérisé par le fait que les moyens de centrage, sur le boîtier (10), sont réalisés sous la forme de tétons et, sur le support (20) sous la forme de cavités (21) dans lesquelles les tétons (16) s'engagent lors du montage des deux éléments, un téton (16) pénétrant dans le passage de câble et servant de guide-câble pour le câble (24) inséré.

3. Support selon la revendication 2, caractérisé par le fait que le téton (16) servant de guide-câble est formé de deux éléments (17) disposés à distance l'un de l'autre qui reçoivent entre eux le câble (24) et le guident.

4. Support selon une des revendications 1 à 3, caractérisé par le fait qu'il est prévu au moins deux moyens de centrage de forme de base circulaire qui sont disposés à distance l'un de l'autre.

5. Support selon une des revendications 1 à 3, caractérisé par le fait qu'il est prévu au moins un moyen de centrage avec une forme de base qui empêche une rotation entre le support (20) et le boîtier (10).
